(19) Europäisches Patentamt / European Patent Office / Office européen des brevets

(11) **EP 1 070 913 B1**

(12) **EUROPÄISCHE PATENTSCHRIFT**

(45) Veröffentlichungstag und Bekanntmachung des Hinweises auf die Patenterteilung:
**27.06.2007 Patentblatt 2007/26**

(51) Int Cl.:
*F21V 23/02* *(2006.01)*      *G02B 6/00* *(2006.01)*

(21) Anmeldenummer: **00115768.4**

(22) Anmeldetag: **21.07.2000**

(54) **Kompakte Leuchte mit Hohllichtleiter**

Compact luminaire having a hollow light conductor

Luminaire compact avec conducteur de lumière

(84) Benannte Vertragsstaaten:
**AT BE CH CY DE DK ES FI FR GB GR IE IT LI LU MC NL PT SE**
Benannte Erstreckungsstaaten:
**SI**

(30) Priorität: **23.07.1999 DE 19934716**

(43) Veröffentlichungstag der Anmeldung:
**24.01.2001 Patentblatt 2001/04**

(73) Patentinhaber: **Siteco Beleuchtungstechnik GmbH**
**83301 Traunreut (DE)**

(72) Erfinder:
• **Belloni, Paola, Dr. Dipl.-Physikerin**
**83278 Traunstein (DE)**
• **Leibig, Joachim, Dipl.-Ing.**
**83374 Traunwalchen (DE)**
• **Prodell, Peter, Dipl.-Physiker**
**83308 Trostberg (DE)**

(74) Vertreter: **Schohe, Stefan et al**
**Forrester & Boehmert**
**Pettenkoferstrasse 20-22**
**80336 München (DE)**

(56) Entgegenhaltungen:
**DE-A- 19 755 658**      **US-A- 5 863 114**

• **PATENT ABSTRACTS OF JAPAN vol. 1999, no. 10, 31. August 1999 (1999-08-31) & JP 11 125818 A (HITACHI LTD), 11. Mai 1999 (1999-05-11)**
• **PATENT ABSTRACTS OF JAPAN vol. 1998, no. 11, 30. September 1998 (1998-09-30) & JP 10 154411 A (TOKO INC), 9. Juni 1998 (1998-06-09)**

**Beschreibung**

Die Erfindung betrifft eine Innenraumleuchte, gemäß dem Oberbegriff des Anspruchs 1.

Für viele Einsatzformen von Innenraumleuchten ist eine flache Ausbildung der lichttechnischen Komponenten wünschenswert, sei es, um eine größere Freiheit bei der Konstruktion und beim Design zu haben, sei es aufgrund der räumlichen Vorgaben im Einsatz. Insbesondere bei Einbauleuchten ist der zur Verfügung stehende Raum in der Decke, in den die Leuchte eingesetzt wird, meist beschränkt, zum einen durch die Höhe des Deckenhohlraums selbst, zum anderen aber auch durch dort verlaufende Versorgungsleitungen (z. B. Lüftungsrohre).

Konventionell werden Innenraumleuchten, insbesondere Einbauleuchten, mit einem Reflektor versehen, welcher das Licht der Lampe zu einer Lichtaustrittsöffnung lenkt, wobei in der Regel zur Blendungsbegrenzung in der Lichtaustrittsöffnung ein Raster vorgesehen ist. Die Verwendung eines konventionellen Reflektors, der das auf ihn einfallende Licht möglichst direkt zu der Lichtaustrittsfläche lenkt, führt bereits häufig zu einer Bauhöhe, die für bestimmte Einsatzzwecke zu groß sein kann. Hinzu kommt, daß Zusatzkomponenten, wie Vorschaltgeräte oder dergleichen, nach dem Stand der Technik neben oder über dem Reflektorgehäuse angeordnet wurden, was ebenfalls zu größeren Abmessungen bzw. zu einer größeren Bauhöhe führte.

Innenraumleuchten mit Hohllichtleitern sind zwar grundsätzlich bekannt, wurden jedoch in der Praxis wegen ihrer aufwendigen Bauweise sowie der aufgrund von Mehrfachreflexionen entstehenden Lichtverluste nur selten zu Beleuchtungszwecken und überhaupt nicht für die Beleuchtung von Bildschirmarbeitsplätzen, Büroräumen und dergleichen eingesetzt.

US-PS5863114 offenbart eine Hintergrundbeleuchtung für Flüssigkristallanzeigen (LCDs) und dergleichen, welche einen Hohllichtleiter aufweist, der eine Lichtauskoppeleinrichtung und eine der Lichtauskoppeleinrichtung gegenüberliegende reflektierende Rückwand aufweist. Die Lichtauskoppeleinrichtung kann dabei aus einer nach innen gebogenen Platte oder aus einer oder mehreren zu der reflektierenden Rückwand geneigten Platten bestehen. Außerhalb des Hohlraums sind Lampen angebracht. Es ist vorgesehen, in Richtung der Lichtausstrahlung dem Hohlraum nachgeschaltet eine Flüssigkristallanzeige anzuordnen.

JP 10-154 411 A offenbart eine Hintergrundbeleuchtung für eine Flüssigkristallanzeige, die eine seitlich angeordnete Lichtquelle und eine keilförmige lichtleitenden Platte aufweist, die Licht zu einer Diffusionsplatte abgibt, welche die Flüssigkristallanzeige beleuchtet. An dem spitzen Ende der keilförmigen lichtleitenden Platte sind elektrische Komponenten derart angeordnet, daß flache elektrische Komponenten auf der Rückseite der keilförmigen Platte in dem von der Diffusionsplatte abgewandten Bereich angeordnet sind, während größere elektrische Komponenten seitlich der keilförmigen lichtleitenden Platte angeordnet sind.

Es ist die Aufgabe der Erfindung, eine Innenraumleuchte gemäß dem Oberbegriff des Anspruchs 1 bzw. 2 zur Verfügung zu stellen, deren Konstruktion eine geringe Bauhöhe zuläßt.

Erfindungsgemäß wird diese Aufgabe gelöst durch eine Innenraumleuchte nach Anspruch 1 oder 2.

Die Erfindung stellt eine Innenraumleuchte mit einem Lichtleiter mit einem lichtleitenden Hohlraum (Hohllichtleiter) zur Verfügung, wobei zumindest eine Wand des Hohlraums eine Lichtauskoppeleinrichtung aufweist, die Licht aus dem Hohlraum zu einer Lichtaustrittsfläche auskoppelt, und eine oder mehrere Lampen an einer zu der Wand mit der Lichtauskoppeleinrichtung nicht parallelen Lichteinkoppelseite angeordnet sind und über diese Lichteinkoppelseite Licht in den Hohlraum einkoppeln, dadurch gekennzeichnet, daß eine elektrische Komponente, wie ein Vorschaltgerät, derart angebracht ist, daß sie zumindest teilweise in einem Bereich liegt, der zwischen der Wand mit der Lichtauskoppeleinrichtung und einer zu dieser Wand im wesentlichen parallelen Ebene liegt, die durch eine von der Lichtauskoppeleinrichtung weggewandten Oberkante der besagten Lichteinkoppelseite verläuft.

Der Hohllichtleiter leitet das Licht in seinem Inneren durch Reflexion an seinen Wänden, wobei vorzugsweise die Lichtauskoppeleinrichtung einen Teil des Lichtes auskoppelt und einen Teil des Lichtes reflektiert. Die Lichtauskoppeleinrichtung kann einen zumindest teilweise transparenten, vorzugsweise klaren Körper aufweisen, der mit einer lichtbrechenden Struktur an einer Grenzfläche zwischen zwei Medien mit unterschiedlichem Brechungsindex zum Auskoppeln des Lichts und zum Erzeugen einer Abschirmung versehen sein kann.

Erfindungsgemäß kann eine Reduzierung der Bauhöhe erreicht werden, welche eine sehr flache Konstruktion der Leuchte möglich macht. Gemäß einer bevorzugten Ausführungsform

der Erfindung kann vorgesehen sein, daß die Gesamtbauhöhe der Leuchte im wesentlichen gleich der maximalen Höhe des Gehäuses des Hohllichtleiters ist.

Erfindungsgemäß kann vorgesehen sein, daß die Höhe des Hohlraums des Hohllichtleiters ungefähr gleich dem Durchmesser der Lampen ist, wobei der Hohlraum zumindest an den den Lampen zugewandten Seiten vorzugsweise etwas höher ist, um eine möglichst vollständige Einkopplung des von der Lampe abgegebenen Lichts in einfacher Weise realisieren zu können, beispielsweise durch einen die Lampe umgebenden Reflektor.

In einer Alternative der Erfindung ist vorgesehen, daß der Hohlraum des Hohllichtleiters eine der Lichtauskoppeleinrichtung gegenüberliegende, zumindest teilweise reflektierende Dekkenwand aufweist, die zumindest in einem Teilabschnitt einen geringeren Abstand von der Lichtauskoppelfläche als in einem anderen Teilabschnitt hat und im Bereich eines Teilabschnitts mit geringerem Abstand oberhalb der Deckenwand außerhalb des Hohlraums eine elektrische Komponente,

z. B. ein Vorschaltgerät, angeordnet ist. Eine Vertiefung der Deckenwand, die auch am Rand des Hohllichtleiters liegen kann, wird dabei in vorteilhafter Weise zum Unterbringen der elektrischen Komponente genutzt. Vorzugsweise nimmt die Höhe des Hohlraums, ausgehend von einer Lichteinkoppelseite, zumindest abschnittsweise in Richtung zu einer gegenüberliegenden Seite ab. Bei einer einseitigen Lichteinkopplung nimmt die Höhe vorzugsweise monoton ab, so daß sich eine keilartige Form im Querschnitt ergibt. Insbesondere bei einer zweiseitigen Einkopplung kann die Deckenwand konkav nach innen gewölbt sein. Sie kann jedoch auch aus einem Polygonzug, insbesondere aus zwei aneinander grenzenden Schrägflächen bestehen. Es kann sowohl bei einseitiger als auch bei mehrseitiger Einstrahlung auch vorgesehen sein, daß die Deckenwand einen schrägen, einen konvex gekrümmten oder einen konkav gekrümmten Teilabschnitt aufweist, in dem sich die Höhe des Hohlraums, ausgehend von einer Seite, an der Licht in diesen eingekoppelt wird, verringert, und daß sich an diesen Bereich ein weiterer Teilbereich anschließt, in dem sich die Höhe nicht verringert und vorzugsweise konstant bleibt. Insbesondere bei einer Leuchte mit einer Lichteinkopplung von zwei gegenüberliegenden Seiten ist es bevorzugt, daß der Hohlraum an zwei einander gegenüberliegenden Seiten, an denen Licht eingekoppelt wird, derartige Teilabschnitte aufweist, in denen die Höhe des Hohlraums, ausgehend von diesen Seiten, abnimmt und die durch einen vorzugsweise geraden Zwischenabschnitt verbunden sind, der einen Bereich minimaler Höhe des Lichtleiters festlegt.

Es hat sich gezeigt, daß durch eine Verringerung der Höhe des Hohlraums zur Mitte oder, bei einer einseitigen Einstrahlung, zu der der Lampe gegenüberliegenden Seite hin, die Lichtstärkeverteilung im Bereich kleiner Winkel zur Senkrechten homogener wird, so daß ein zu starker Abfall der Lichtstärke bei diesen kleinen Winkeln, der ohne eine solche Verringerung auftritt, vermieden wird.

Gemäß einer Alternative der Erfindung sind elektrische Komponenten zumindest teilweise im Bereich des Hohlraums angeordnet.

Es hat sich überraschenderweise gezeigt, daß insbesondere dann, wenn für die Lichtauskopplung ein zumindest teilweise lichtdurchlässiger Körper verwendet wird, der Licht durch eine lichtbrechende Struktur an einer seiner Grenzflächen zu einer Lichtaustrittsfläche auskoppelt, eine in dem Hohlraum befindliche Komponente, wie ein Vorschaltgerät, das Erscheinungsbild der Lichtaustrittsfläche nicht oder jedenfalls nicht wesentlich stört.

Die elektrische Komponente, beispielsweise ein Vorschaltgerät, kann vollständig in dem Hohlraum liegen. Insbesondere dann, wenn diese Komponente reflektierend verkleidet ist, wird dadurch das Erscheinungsbild der Leuchte nicht oder nur unwesentlich gestört. Für Hohllichtleiter mit kleiner Höhe oder für Hohllichtleiter mit sich ändernder Höhe kann es jedoch vorteilhaft sein, wenn die elektrische Komponente teilweise durch eine Grenzwand des-Hohlraums des Hohllichtleiters, im Regelfall eine Deckenwand, hindurchragt. Auf diese Weise ist es möglich, die Höhe des Hohlraums unabhängig von der den Abmessungen der elektrischen Komponente abschnittsweise zu verringern, was für die Lichtstärkeverteilung vorteilhaft sein kann. In diesem Zusammenhang, aber auch in anderem Zusammenhang, kann es zweckmäßig sein, die elektrische Komponente an einer Seitenwand des Hohlraums, welche von der Deckenwand verschieden ist, beispielsweise an der Vorder- oder Rückwand, zu befestigen.

Es kann erfindungsgemäß auch vorgesehen sein, daß die elektrische Komponente an der Dekkenwand des Hohlraums befestigt ist.

Es kann auch vorgesehen sein, daß die elektrische Komponente in der Mitte des Hohlraums angeordnet ist. Wie vorangehend bereits ausgeführt wurde, ist eine Verringerung der Höhe zur Mitte des Hohlraums hin vorteilhaft, um eine homogenere Lichtstärkeverteilung bei kleinen Winkeln zu erreichen. Gemäß dieser Ausführungsform wird die elektrische Komponente in vorteilhafter Weise zur Verringerung der Höhe des Hohlraums eingesetzt.

Erfindungsgemäß kann auch vorgesehen sein, daß eine elektrische Komponente in dem Hohlraum in der Nähe einer Lichteinkoppelseite angeordnet ist, an der von einer Lampe Licht eingestrahlt wird.

Auch hier hat sich in überraschender Weise gezeigt, daß jedenfalls dann, wenn die elektrische Komponente mit ihrer Schmalseite der Lichteinkoppelseite zugewandt angeordnet wird, die Lichtabgabe und das Erscheinungsbild der Lichtaustrittsfläche nicht oder nur unwesentlich beeinträchtigt werden.

Insbesondere kann vorgesehen sein, daß die elektrische Komponente in der Nähe des Endes einer stabförmigen Lampe angeordnet ist.

Bei dieser Ausführungsform wird in vorteilhafter Weise ausgenutzt, daß die Lichtabgabe in der Nähe der Enden der Lampen und dementsprechend auch eine etwaige Störung der Lichtabgabe der Leuchte geringer ist.

Die elektrische Komponente kann mit einer reflektierenden Verkleidung versehen sein. Die Verkleidung kann ganz oder abschnittsweise hochglänzend oder spiegelnd reflektierend sein. Sie kann aber auch ganz oder teilweise diffus reflektierend sein. Eine diffus reflektierende Verkleidung kann vorteilhaft sein, wenn eine homogene Lichtstärkeverteilung über einen größeren Winkelbereich gewünscht ist. Eine spiegelnd reflektierende Verkleidung führt zu einem höheren Leuchtenwirkungsgrad.

Gemäß einer bevorzugten Ausführungsform besteht die Lichtauskoppeleinrichtung aus einem zumindest teilweise lichtdurchlässigen ein- oder mehrteiligen, vorzugsweise klaren Körper, der den Hohlraum des Hohllichtleiters zumindest teilweise auf einer Seite begrenzt und eine oder mehrere Grenzflächen zwischen Medien mit unterschiedlichem Brechungsindex aufweist, die mit einer lichtbrechenden Struktur versehen sind, derart, daß der Körper einen Teil des auf ihn einfallenden Lichts in den Hohlraum zurück reflektiert und einen zweiten Teil des Lichts über diese lichtbrechende Struktur bzw. diese lichtbrechenden Strukturen zu einer Lichtaustrittsfläche auskoppelt.

Dabei kann vorgesehen sein, daß die Struktur oder die Strukturen aus linienförmigen Prismen bestehen, d.h. länglichen Prismen, die in der Richtung ihrer Länge im wesentlichen translationsinvariant sind.

Es kann auch vorgesehen sein, daß der Körper zumindest zwei Grenzflächen mit lichtbrechenden Strukturen aus linienförmigen Prismen aufweist, wobei die Prismen an der ersten Grenzfläche mit den Prismen an der zweiten Grenzfläche einen nicht verschwindenden Winkel einschließen, der vorzugsweise 90° beträgt.

Im Rahmen der Erfindung sind auch andere linienförmige Prismen denkbar. Beispielsweise können spiralförmige Strukturen, insbesondere zwei gegenläufige Spiralen, an zwei verschiedenen Grenzflächen verwendet werden. Es ist auch eine Struktur von kreisförmigen Prismen denkbar, die gemäß einer bevorzugten Ausführungsform mit sternförmigen Prismen an einer zweiten Grenzfläche zusammenwirken.

Die erfindungsgemäße Leuchte kann insbesondere als Einbau- oder Anbauleuchte ausgebildet sein.

Die Höhe des Hohllichtleiters, insbesondere seine maximalen Höhe, beträgt vorzugsweise weniger als 70 mm, stärker bevorzugt weniger als 55 mm.

Überraschenderweise hat sich herausgestellt, daß selbst bei einem Anbringen des Vorschaltgeräts in dem Hohlraum selbst die lichttechnischen Eigenschaften der Hohllichtleiterleuchte im wesentlichen unbeeinflußt bleiben, insbesondere, wenn die Vorschaltgeräte oder dergleichen, die in dem Hohlraum angebracht werden, mit einer reflektierenden Verkleidung versehen werden.

Weitere Merkmale und Vorteile der Erfindung ergeben sich aus der nachfolgenden Beschreibung von Ausführungsbeispielen der Erfindung mit Bezug auf die beigefügten Zeichnungen.

Fig. 1 zeigt ein erstes Ausführungsbeispiel der Erfindung in Form einer Deckeneinbauleuchte in einer perspektivischen Ansicht,

Fig. 2 zeigt die Einbauleuchte gemäß Fig. 1 in einer Schnittansicht,

Fig. 3 zeigt in einer perspektivischen Darstellung die Prismenplatten der Leuchte gemäß Fig. 1,

Fig. 4 zeigt schematisch eine Schnittansicht entlang der Linie IV-IV in Fig. 3,

Fig. 5 zeigt schematisch eine Schnittansicht in Richtung der Linie V-V der Fig. 3,

Fig. 6a bis 6e zeigen alternative Ausführungsformen des Hohllichtleiters,

Fig. 7 zeigt eine zweite Ausführungsform einer erfindungsgemäßen Leuchte in einem schematischen Querschnitt,

Fig. 8 zeigt eine dritte Ausführungsform einer erfindungsgemäßen Leuchte in einem schematischen Querschnitt,

Fig. 9 zeigt eine vierte Ausführungsform einer erfindungsgemäßen Leuchte in einem schematischen Querschnitt,

Fig. 10a zeigt eine fünfte Ausführungsform einer erfindungsgemäßen Leuchte in einem schematischen Querschnitt senkrecht zur Lampenachse,

Fig. 10b zeigt einen Schnitt durch die Leuchte der Fig. 10a entlang der Linie X-X,

Fig. 11a zeigt eine sechste Ausführungsform der erfindungsgemäßen Leuchte in einem schematischen Querschnitt senkrecht zur Lampenachse,

Fig. 11b zeigt einen Schnitt durch die Leuchte der Fig. 11a entlang der Linie XI-XI,

Fig. 12 zeigt eine siebte Ausführungsform einer erfindungsgemäßen Leuchte in einem schematischen Querschnitt und

Fig. 13       zeigt eine achte Ausführungsform einer erfindungsgemäßen Leuchte in einem schematischen Querschnitt.

Nachfolgend werden Ausführungsbeispiele einer erfindungsgemäßen Leuchte anhand des Beispiels einer Einbauleuchte erläutert. Die Erfindung ist allerdings nicht auf eine Einbauleuchte beschränkt und kann vielmehr auch auf andere Arten von Leuchten, insbesondere Pendelleuchten, Anbauleuchten, Wandleuchten usw. angewandt werden.

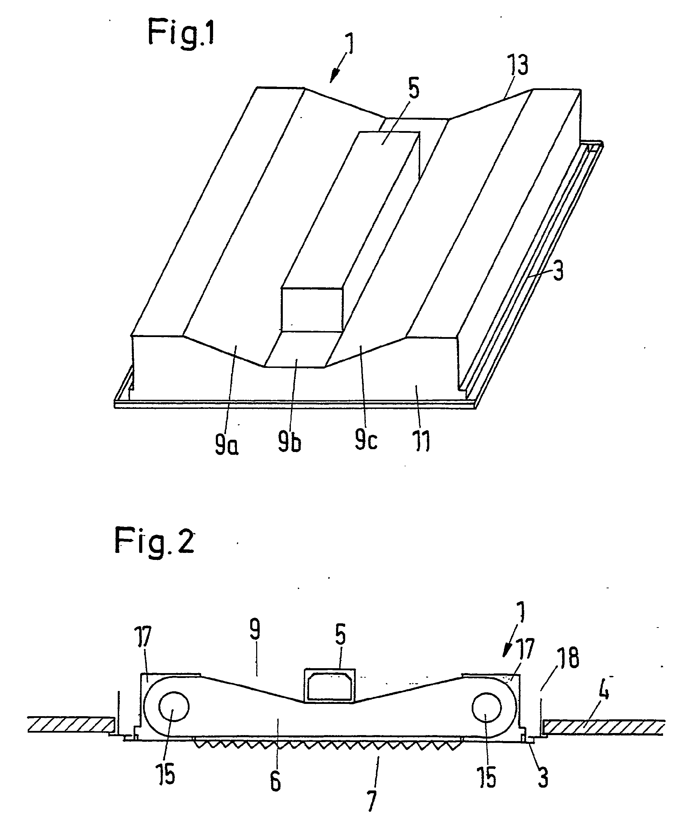

Fig. 1 zeigt in einer perspektivischen Ansicht schematisch eine erfindungsgemäße Einbauleuchte mit einem Gehäuse 1, einem Gehäuserand 3 zum Befestigen der Leuchte an oder in einer Deckenkonstruktion 4 (vgl. Fig. 2) sowie einem Vorschaltgerät 5, das auf der Oberseite des Gehäuses 1 angebracht ist. Wie die Schnittansicht der Fig. 2 zeigt, ist das Gehäuse 1 teilweise als Hohllichtleiter mit einem Hohlraum 6 ausgebildet. Genauer wird dieser Hohllichtleiter auf der Unterseite durch eine nachfolgend näher beschriebene Lichtauskoppeleinrichtung 7, auf der Oberseite durch eine Deckenwand 9 mit Deckenabschnitten 9a, 9b und 9c, auf der Vorderseite durch einen Teil der Frontwand 11 des Gehäuses und auf der Rückseite durch einen Teil der Rückwand 13 des Gehäuses 1 begrenzt. Die Wände 9, 11 und 13 sind zu dem Hohlraum 6 hin reflektierend ausgebildet. Die Lichtauskoppeleinrichtung 7 reflektiert einen Teil des auf sie einfallenden Lichts in den Hohlraum 6 des Hohllichtleiters zurück und koppelt einen zweiten Teil des Lichts nach unten aus. In den Hohlraum 6 des Hohllichtleiters koppeln Lampen 15, die an den beiden Schmalseiten des Hohllichtleiters innerhalb des Gehäuses angeordnet sind, Licht ein. Für eine möglichst vollständige Lichteinkopplung sind diese Lampen mit Reflektoren 17 umgeben. Die Leuchte ist im Einsatz über den Rand 3 an T-Profilen 18 abgestützt und in konventioneller Weise an der Deckenkonstruktion 4 befestigt.

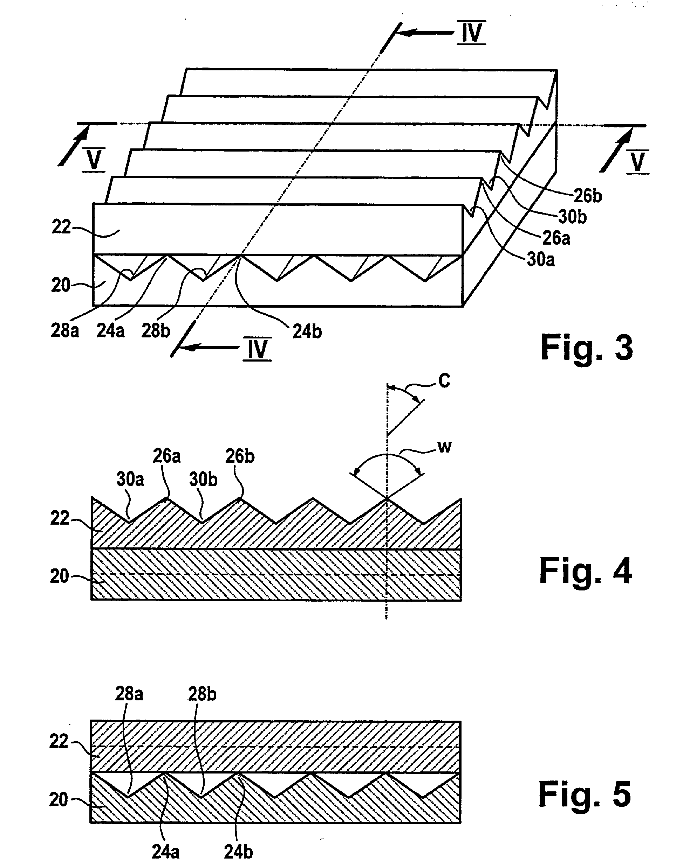

Die Lichtauskoppeleinrichtung 7 ist in den Figuren 3 bis 5 perspektivisch bzw. im Schnitt näher dargestellt. Sie besteht aus zwei lichtdurchlässigen Platten 20 und 22, die jeweils an der der Seite des Lichteinfalls gegenüberliegenden Seite eine Prismenstruktur mit satteldachförmigen Prismen 24a, 24b ... bzw. 26a, 26b, ... (nachfolgend kollektiv mit 24 bzw. 26 bezeichnet) versehen sind, die durch gerade rinnenförmige Vertiefungen 28a, 28b ... bzw. 30a, 30b, ... (nachfolgend kollektiv mit 28 bzw. 30 bezeichnet) voneinander getrennt sind. Dabei stehen die Kantenlinien der Prismen 24 bzw. die Vertiefungen 28 senkrecht zu den Kantenlinien der Prismen 26 bzw. den Vertiefungen 30. Der besseren Anschaulichkeit halber sind die Prismenplatten in Fig. 2 bis 4 so dargestellt, daß die Prismen, die im Einsatz nach außen, also zur Lichtaustrittsseite hin, liegen, nach oben gerichtet dargestellt sind. Die Breite der Prismen liegt gemäß den derzeit bevorzugten Ausführungsformen zwischen ca. 0,01 mm bis 40 mm, bevorzugt 0,05 mm bis 10 mm und besonders bevorzugt 0,1 mm bis 5 mm. Die Platten 20 und 22 bestehen aus einem leicht bearbeitbaren, lichtdurchlässigen, vorzugsweise klaren Material, z.B. Acrylglas oder Polycarbonat.

Die Prismenstrukturen der Platten 20 bzw. 22 legen jeweils den Abschirmwinkel der Leuchte in der Ebene senkrecht zu den Kantenlinien der Prismen 24 bzw. 26 bzw. den Vertiefungen dazwischen fest. Dabei bestehen zwischen dem Prismenwinkel w und dem Abschirmwinkel C in der Ebene senkrecht zu den Kantenlinien der Prismen (vgl. Fig. 4), wenn der Hohlraum 6 mit Luft gefüllt ist, die folgenden Relationen:

$$w/2 \leq C$$

$$w \geq 2\,(2\arcsin(1/n) + 90)/3$$

$$\tan(w/2) \leq (n\,\sin(\arcsin(1/n) - 3\ w/2) + \cos(w/2)) / (n\,\cos(\arcsin(1/n) - 3\ w/2) - \sin(w/2)),$$

wobei n der Brechungsindex der Platte 20 bzw. 22 ist. Aufgrund der senkrecht zueinanderstehenden Prismenstrukturen ergibt sich eine Entblendung sowohl in Längs- als auch in Querrichtung, wobei der Abschirmwinkel C für die beiden Richtungen durch eine geeignete Wahl des Prismenwinkels w bzw. des Prismenmaterials unterschiedlich für die beiden Prismenstrukturen 24 und 26 gewählt werden kann. Wenn eine Abschirmung oder Entblendung nur in einer Richtung erwünscht oder erforderlich ist, kann eine der Platten entfallen.

Anstelle von orthogonalen rillenförmigen Prismenstrukturen sind auch andere linienförmige Prismenstrukturen mit senkrecht aufeinanderstehenden Linien denkbar, z.B. kreisförmige Rillen bzw. Prismen in einer Struktur und sternförmig von dem Kreiszentrum ausgehenden Rillen mit dazwischenliegenden Prismen in der anderen Struktur, die auf allen Kreisrillen senkrecht stehen. Die Orientierung der Prismenstrukturen 24 und 26 kann von der in den Figuren 3 bis 5 dargestellten Orientierung abweichen. Die beiden Prismenstrukturen können beispielsweise beide in die umgekehrte Richtung wie in Fig. 3 bis 5 weisen, also jeweils zum Hohlraum 6 hin. Die beiden Prismenstrukturen können auch in entgegengesetzte Richtungen weisen, so daß die Prismenstrukturen jeweils nach außen weisen oder, alternativ hierzu, direkt aneinander angrenzen. Die beiden Prismenstrukturen können auch an zwei gegenüberliegenden Seiten einer einzigen Platte ausgebildet sein.

Wie man in Fig. 1 und 2 erkennen kann, ist die Deckenwand 9 nach innen vertieft ausgebildet und besteht aus zwei nach innen schräg abfallenden Flächen 9a und 9c sowie einer dazwischen liegenden waagrechten Fläche 9b parallel zu den Platten 20 und 22, auf der das Vorschaltgerät 5 montiert ist. Es hat sich gezeigt, daß bei einer Leuchte, bei der, wie in Fig. 2 dargestellt, von zwei Seiten aus Licht in den Hohlraum 6 eingekoppelt wird, ein zu starker Abfall der Lichtstärkeverteilung bei kleinen Winkeln zur Senkrechten vermieden wird und der Leuchtenbetriebswirkungsgrad insgesamt erhöht wird, wenn die Höhe des Hohlraums 6 zur Mitte hin abnimmt. Erfindungsgemäß wird der dadurch auf der Oberseite des Leuchtengehäuses gewonnene Raum in vorteilhafter Weise dafür genutzt, das Vorschaltgerät 5 unterzubringen, so daß das außerhalb des Hohlraums 6 angebrachte Vorschaltgerät die Bauhöhe oder allgemeiner die Abmessungen der Leuchte im wesentlichen nicht beeinflußt.

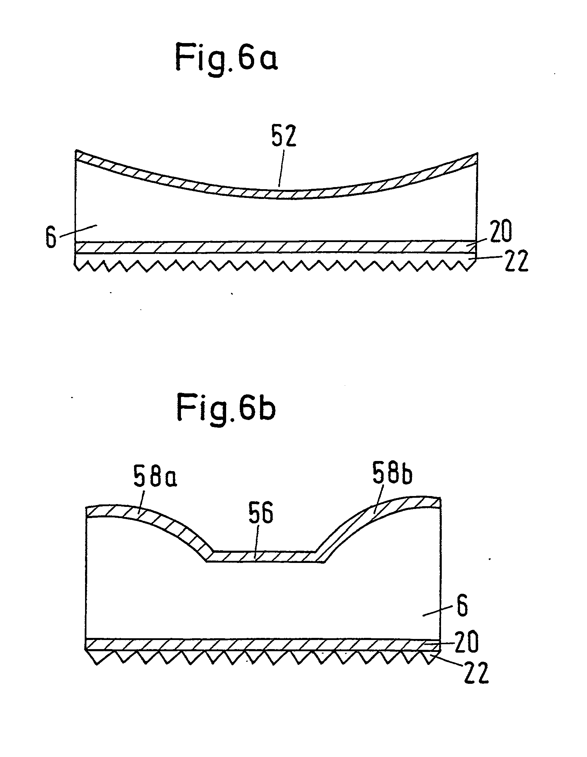

Fig. 6a bis 6e zeigen weitere mögliche Gestaltungsformen des Hohllichtleiters mit einer nach innen vertieften Deckenwand, bei denen im Bereich der Vertiefung das Vorschaltgerät untergebracht werden kann.

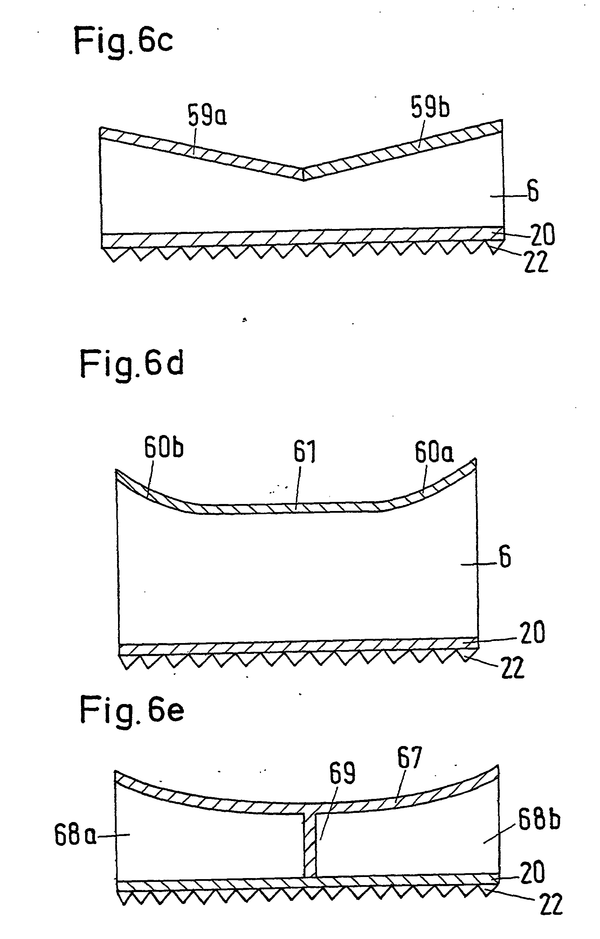

Bei der Ausführungsform der Fig. 6a hat die Deckenwand 52 eine konkav nach innen gewölbte Form, die in der Mitte einen minimalen Abstand zu der Lichtauskoppeleinrichtung 7 aufweist. Bei dem Ausführungsbeispiel gemäß Fig. 6b besteht die Deckenwand aus einem waagrechtem Abschnitt 56, welcher den Bereich minimaler Höhe des Hohlraums 6 festlegt, und nach außen und oben geschwungenen Abschnitten 58a und 58b. Fig. 6c zeigt eine Abwandlung der Ausführungsform gemäß Fig. 1. Bei dieser Ausführungsform entfällt die zentrale waagrechte Fläche 9b und die beiden Schrägflächen 59a und 59b schließen unmittelbar aneinander an, so daß sich eine Dreiecksform ergibt. Das Ausführungsbeispiel der Fig. 6d ist ähnlich demjenigen der Fig. 6b, wobei jedoch die konvexen Deckenabschnitte 58a und 58b durch konkave Abschnitte 60a und 60b ersetzt sind, die durch eine waagrechte Fläche 61 miteinander verbunden sind. Durch eine geeignete Wahl der Krümmung der konkaven Deckenwand 52 bzw. von konkaven Deckenabschnitten 52 oder 60a, 60b oder von konvexen Abschnitten 58a, 58b, der Breite eines zentralen waagrechten Abschnitts 9b, 56 oder 61 und der Neigung von schräg gestellten Deckenabschnitten 9a, 9c oder 59a, 59b läßt sich die Lichtstärkeverteilungskurve, insbesondere hinsichtlich der Lage und der Stärke der Maxima modellieren. Den Ausführungsformen gemäß Fig. 1, 2 und 6a bis 6d ist gemeinsam, daß in der Mitte des Hohlraums ein Punkt oder Abschnitt minimaler Höhe liegt, der die Abstrahlung von Licht der Lampen 3 bzw. 4 auf den Bereich der jeweils gegenüberliegenden offenen Schmalseite begrenzt oder verhindert.

Fig. 6e zeigt eine abgewandelte Ausführungsform des Hohllichtleiters gemäß Fig. 6a mit einer konkav gekrümmten Deckenwand 67 zwischen den beiden Schmalseiten 68a und 68b, wobei in der Mitte des Hohlraums 6 eine Trennwand 69 vorgesehen ist. Dieser Hohllichtleiter ist für die Verwendung mit zwei Lampen vorgesehen, die jeweils an den beiden Schmalseiten 68a bzw. 68b angeordnet sind. Selbstverständlich kann eine Trennwand ähnlich wie Trennwand 69 auch bei den anderen Ausführungsformen der Fig. 1 und 6a bis 6d eingesetzt werden.

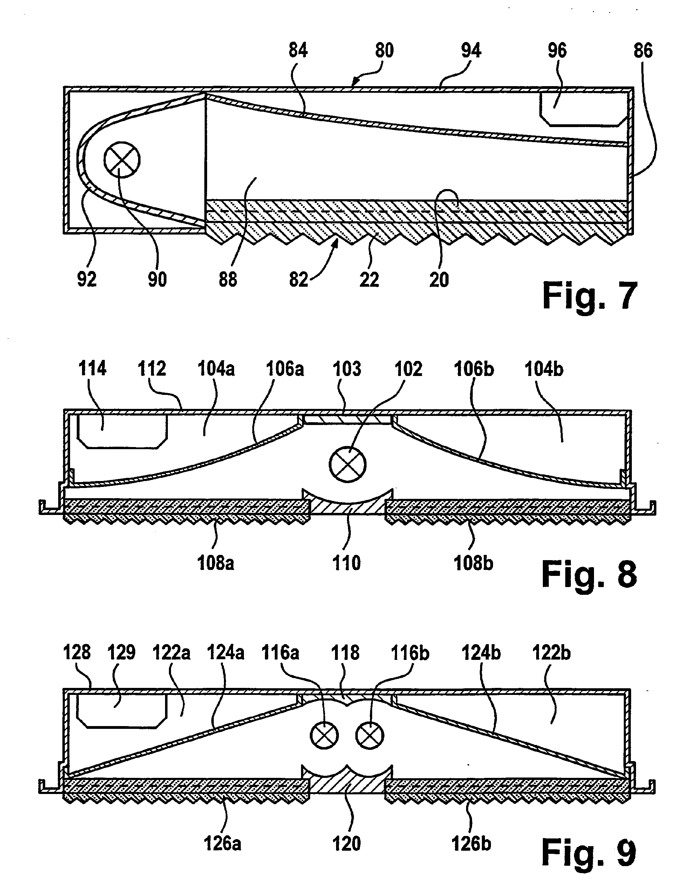

Fig. 7 zeigt eine zweite Ausführungsform einer erfindungsgemäßen Leuchte mit einseitiger Lichteinstrahlung in den Hohllichtleiter. Im Fall dieser Leuchte ist das Gehäuse 80 quaderförmig ausgebildet. In dem Gehäuse befindet sich ein Hohllichtleiter mit einer Lichtauskoppeleinrichtung 82, die aus den vorangehend mit Bezug auf Fig. 3 bis 5 beschriebenen Platten 20 und 22 bestehen kann, einer reflektierenden Deckenwand 84, einer reflektierenden Seitenwand 86 an der der Lichteinkoppelseite gegenüberliegenden Seite sowie reflektierenden Vorder- und Rückseiten (nicht dargestellt). Der Hohllichtleiter legt wieder einen Hohlraum 88 fest, in den eine Lampe 90, der ein Reflektor 92 zugeordnet ist, Licht einkoppelt, das von den Wänden des Hohlraums 88 reflektiert wird und von der Lichtauskoppeleinrichtung 82 teilweise reflektiert und teilweise ausgekoppelt wird. Fig. 7 zeigt, daß die Höhe des Hohlraums 88, ausgehend von der Seite der Lampe 90 zu der gegenüberliegenden Seite 86 hin in einer keilartigen Form abnimmt. Dadurch entsteht ein Freiraum zwischen der Gehäusedecke 94 und der Dachwand des Hohllichtleiters 84, in dem als elektrische Komponente ein Vorschaltgerät 96 angeordnet ist. Man erkennt, daß die Unterbringung des Vorschaltgerätes die Bauhöhe der Leuchte unverändert läßt.

Die Querschnittsform des Hohlraums 88 in Fig. 7 ist lediglich beispielhaft. Andere Querschnittsformen, bei denen sich die Höhe des Hohlraums verringert, können ebenfalls verwendet werden. Insbesondere können die Ausführungsformen des Hohllichtleiters gemäß Fig. 6a bis 6d derart modifiziert werden, daß der Hohllichtleiter gewissermaßen nur die Hälfte eines Hohllichtleiters gemäß Fig. 1 und 6b bis 6d darstellt, ähnlich wie dies im Verhältnis zwischen dem Hohllichtleiter gemäß Fig. 6a und dem Hohllichtleiter gemäß Fig. 7 der Fall ist.

Fig. 8 zeigt eine weitere Ausführungsform einer erfindungsgemäßen Leuchte, bei der eine Lampe 102 in einem zentralen Trageteil 103 zwischen zwei Hohllichtleitern 104a und 104b angeordnet ist. Die Hohllichtleiter 104a und 104b sind entsprechend dem Hohllichtleiter gemäß der Ausführungsform der Fig. 7 aufgebaut und besitzen nach außen hin abfallende Dekkenwände 106a und 106b, denen Lichtauskoppeleinrichtungen 108a und 108b gegenüberstehen. Die Lampe 102 strahlt Licht direkt in die beiden Hohllichtleiter 104a und 104b ein. Zusätzlich ist ihr ein Reflektor 110 zugeordnet, welcher das nach unten abgestrahlte Licht in die beiden Hohllichtleiter 104a und 104b lenkt. Das Gehäuse ist wieder quaderförmig aufgebaut. In einem Zwischenraum zwischen der oberen Gehäusewand 112 und der Deckenwand 106a des Hohllichtleiters 104a ist ein Vorschaltgerät 114 untergebracht, das an der Gehäusewand 112 befestigt ist.

Fig. 9 zeigt eine zweilampige Abwandlung der Leuchte gemäß Fig. 8. Die Leuchte weist zwei Lampen 116a und 116b auf, denen auf der Ober- und Unterseite evolventenförmige Reflektoren 118 bzw. 120 zugeordnet sind, welche das Licht der Lampen in zwei Hohllichtleiter 122a und 122b einkoppeln. Die Hohllichtleiter 122a und 122b sind im wesentlichen ähnlich den Hohllichtleitern 104a und 104b gemäß Fig. 7 aufgebaut; allerdings sind die Deckenwände 124a und 124b schräg abfallend oder mit einer konvexen Krümmung ausgebildet und erstrekken sich bis zu den jeweiligen Lichtauskoppeleinrichtungen 126a und 126b, so daß insgesamt eine spitze Keilform entsteht. In dem Bereich zwischen der oberen Gehäusewand 128 und der Deckenwand 124a ist wieder ein Vorschaltgerät 129 untergebracht, das an der Gehäusewand 128 befestigt ist.

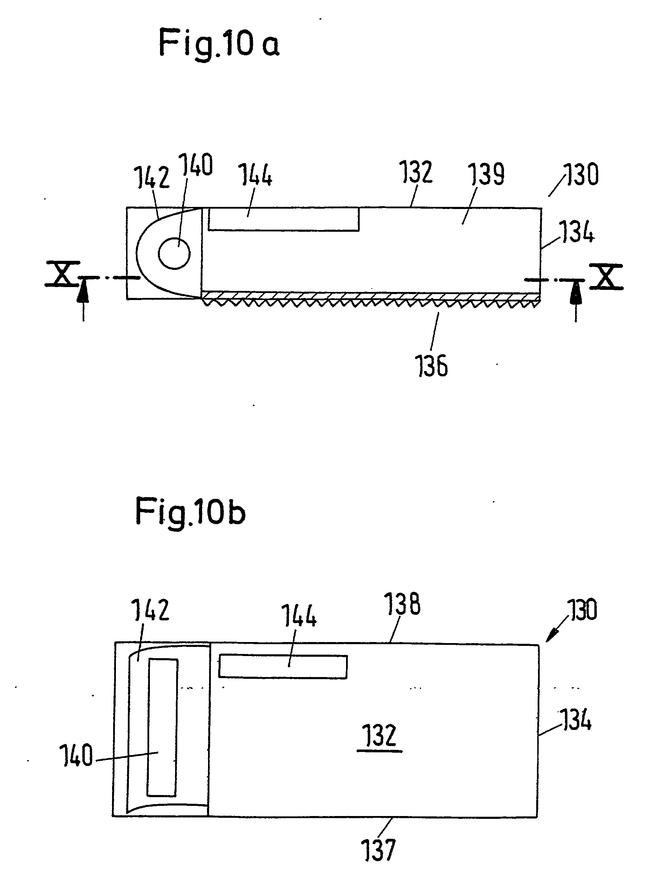

Fig. 10a und 10b zeigen eine Ausführungsform einer erfindungsgemäßen Leuchte, bei der das Vorschaltgerät in dem Hohllichtleiter untergebracht ist. Bei dem dargestellten Ausführungsbeispiel weist die Leuchte ein quaderförmiges Gehäuse 130 auf, das in seinem Inneren teilweise als Hohllichtleiter mit einer reflektierenden Deckenwand 132, einer reflektierenden Seitenwand 134, einer der Deckenwand 132 gegenüberstehenden Lichtauskoppeleinrichtung 136 sowie reflektierenden Vorder- und Rückwänden 137 bzw. 138 ausgebildet ist. Die vorangehend genannten Bestandteile wirken wie bei den vorangehend beschriebenen Ausführungsbeispielen und werden daher nicht näher beschrieben. In den Hohlraum 139 des Hohllichtleiters wird von einer Lampe 140 über eine Schmalseite Licht eingekoppelt, wobei die Lichteinkopplung durch einen der Lampe 140 zugeordneten Reflektor 142 verstärkt wird. In dem Hohlraum 139 ist nun an der Deckenwand 132 in der Nähe der Lampe 140 ein Vorschaltgerät 144 befestigt, das mit einer reflektierenden Verkleidung versehen ist. Die Reflexionseigenschaften der Verkleidung entsprechen denjenigen der Innenseite der Deckenwand 132. Die Verkleidung des Vorschaltgerätes 144 und die Deckenwand 132 können hochglänzend, aber auch diffus reflektierend ausgebildet sein. Im Falle einer diffus reflektierenden Deckenwand 132 kann unter Umständen sogar eine reflektierende Verkleidung des Vorschaltgerätes 144 entfallen. Überraschenderweise hat sich gezeigt, daß die Anwesenheit des Vorschaltgerätes 144 in dem Hohlraum 139 die Lichtstärkeverteilungskurve der Leuchte nur geringfügig beeinflußt. Das Vorschaltgerät 144 ist so angeordnet, daß seine Stirnseite zu der Lampe 140 hinweist und seine Längsachse in der Ebene des Schnittes der Fig. 10a liegt. Das Vorschaltgerät 144 ist weiterhin in der Nähe eines Endes der Lampe 140, also nahe der entsprechenden Lampenfassung angebracht. Da in diesem Bereich die Lichtabstrahlung der Lampe 140 geringer als in den anderen Bereichen ist, ist bei dieser Anordnung der Einfluß des in dem Hohlraum 139 angeordneten Vorschaltgerätes 144 auf die Lichtabgabe der Leuchte besonders gering.

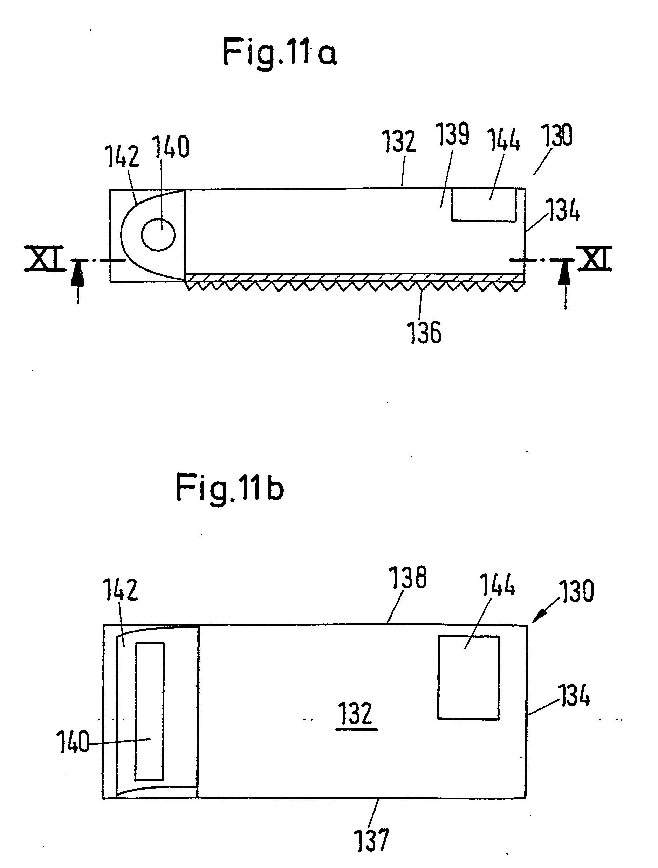

Fig. 11a und 11b zeigt eine Abwandlung der Leuchte gemäß Fig. 10a und 10b, wobei in Fig. 11a und 11b gleiche Elemente mit gleichen Bezugszeichen bezeichnet sind. Die Ausführungform gemäß Fig. 11 a und 11b unterscheidet sich von derjenigen der Fig. 10a und 10b dadurch, daß die Längsachse des Vorschaltgerätes 144, das wieder in dem Hohlraum 138 an der Dachwand 132 in der Nähe eines Endes der Lampe 140 angeordnet ist, parallel zu der Achse der Lampe 140 ist. Bei der Ausführungsform gemäß Fig. 11 ist das Vorschaltgerät 144 außerdem an dem von der Lampe 140 entfernten Ende des Hohlraums 139 angebracht. Bei dieser Anordnung ist der Einfluß des Vorschaltgerätes 144 auf die Lichtstärkeverteilung geringer als bei der - grundsätzlich auch möglichen - Anordnung des Vorschaltgerätes 144 in dem Hohlraum auf der Seite der Lampe 140 parallel zu der Achse dieser Lampe. Der Einfluß des Vorschaltgerätes auf die Lichtabgabe der Leuchte ist in letzterem Fall etwas größer als bei der Anordnung gemäß Fig. 10a und 10b, aber immer noch akzeptabel.

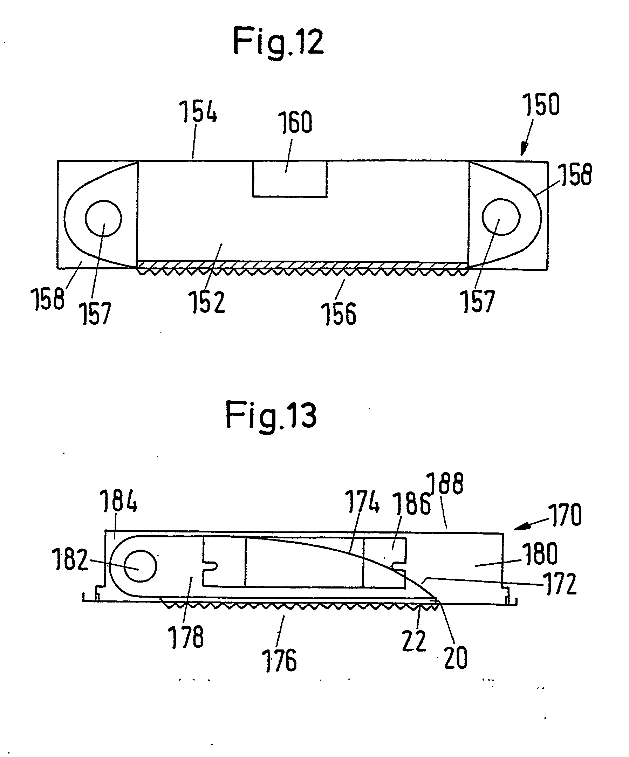

Fig. 12 zeigt eine weitere Ausführungsform einer erfindungsgemäßen Leuchte, bei der in einem Gehäuse 150 ein Hohllichtleiter mit einem Hohlraum 152 angeordnet ist, der, wie bei den vorangehend beschriebenen Ausführungsformen, aus einer reflektierenden Deckenwand 154, einer der Dachwand gegenüberstehenden Lichtauskoppeleinrichtung 156 sowie reflektierenden Vorder- und Rückwänden (nicht dargestellt) aufgebaut ist. Die Deckenwand 154 bildet einen Teil der oberen Gehäusewand. Seitlich des Hohllichtleiters sind Lampen 157 mit zugeordneten Reflektoren 158 angeordnet, welche Licht in den Hohlraum 152 einkoppeln. Bei diesem Ausführungsbeispiel ist die Deckenwand 154 diffus reflektierend und eben ausgebildet. An der Deckenwand 154 ist in etwa in der Mitte zwischen den beiden Lampen 157 ein Vorschaltgerät 160 in dem Hohlraum 152 befestigt, das mit einer diffus reflektierenden Verkleidung versehen ist. Es hat sich gezeigt, daß bei dieser Anordnung die Lichtabgabe der Leuchte nur geringfügig beeinträchtigt wird, selbst dann, wenn die reflektierende Verkleidung des Vorschaltgerätes 160 entfällt. Vielmehr ergibt sich der vorangehend genannte Effekt betreffend die Lichtstärkeverteilung im Bereich von kleinen Winkeln zur Vertikalen durch die Verringerung der Höhe des Hohlraums 152 im Bereich des Vorschaltgerätes 160. Selbstverständlich können die Deckenwand 154 und die reflektierende Verkleidung des Vorschaltgeräts 160 auch hochglänzend und mit einem hohen Reflexionsgrad reflektierend ausgebildet sein.

Fig. 13 zeigt eine alternative Form der Befestigung des Vorschaltgerätes. Die in Fig. 13 gezeigte Leuchte weist wieder ein im wesentlichen quaderförmiges Gehäuse 170 auf, in dessen Innerem ein Hohllichtleiter 172 mit einer Deckenwand 174 und einer der Deckenwand 174 gegenüberstehenden Lichtauskoppeleinrichtung 176 angeordnet ist, die, wie vorangehend beschrieben, aus zwei lichtdurchlässigen Platten 20, 22 mit einer Prismenstrukur besteht, ausgebildet ist, wobei die Dachwand 174 konvex nach unten gewölbt ist und in einem spitzen Winkel an die Platte 20 der Lichtauskoppeleinrichtung 176 anschließt. Auf der Rückseite wird der Hohlraum 178 des Hohllichtleiters durch die reflektierend ausgebildete Rückwand 180 des Gehäuses 170 begrenzt und auf der Vorderseite durch die (nicht dargestellte) Frontseite des Gehäuses 170. Die den Hohlraum 178 begrenzenden Flächen der vorangehend genannten Wände sind wieder reflektierend ausgebildet. Eine Lampe 182, der ein Reflektor 184 zugeordnet ist, koppelt Licht in den Hohlraum 178 ein, das über die Lichtauskoppeleinrichtung 176 ausgekoppelt wird. An der Rückwand 180 des Gehäuses ist ein Vorschaltgerät 186 befestigt, das sich teilweise in dem Hohlraum 178 befindet. Wie Fig. 13 zeigt, ragt jedoch ein Teil des Vorschaltgerätes durch eine entsprechend ausgebildete Öffnung in der Dachwand 174 nach außen in den Bereich zwischen der Dachwand 174 und der oberen Wand des Gehäuses 188 hin vor. Auf diese Weise ist es möglich, ein Vorschaltgerät in dem Gehäuse unterzubringen, das aufgrund seiner Abmessungen weder vollständig in den Hohlraum 178 noch vollständig in den Bereich zwischen der Dachwand 174 und der Wand 188 paßt. Dadurch wird die Anordnung des Vorschaltgeräts seitlich neben dem Hohllichtleiter 172 vermieden. Mit dieser Anordnung kann die Breite der Leuchte verringert werden oder es kann, wie im Fall der Leuchte gemäß Fig. 13, dasselbe Gehäuse 170 für ein- und zweilampige Leuchten verwendet werden. Diese Ausführungsform gestattet es weiterhin, auch bei Leuchten mit kleiner Bauhöhe, die in etwa der Höhe des Vorschaltgerätes entspricht, den Hohlraum 178 mit einer in der Richtung von der Lampe 182 weg abnehmenden Höhe auszubilden, ohne auf die erfindungsgemäßen Vorteile verzichten zu müssen. Selbstverständlich kann das Vorschaltgerät auch bei den anderen vorangehend beschriebenen Ausführungsformen, insbesondere bei den Ausführungsformen der Fig. 10a und 10b, an der vorderen oder hinteren Begrenzungswand des Gehäuses bzw. des Hohllichtleiters angebracht werden. Ebenso ist auch, insbesondere bei den vorangehend mit Bezug auf Fig. 1 bis 9 beschriebenen Ausführungsformen, eine Unterbringung des Vorschaltgerätes derart, daß es teilweise in den Hohlraum des Hohllichtleiters hineinragt, möglich und führt zu zufriedenstellenden Resultaten.

Die in der vorangehenden Beschreibung, den Ansprüchen und den Zeichnungen offenbarten Merkmale der Erfindung können sowohl einzeln als auch in beliebiger Kombination für die Verwirklichung der Erfindung in ihren verschiedenen Ausführungsformen wesentlich sein.

## Patentansprüche

1.  Innenraumleuchte, insbesondere Einbau-, Anbau- oder Pendelleuchte, mit einem Hohllichtleiter, wobei zumindest eine Wand des Hohlraums des Hohllichtleiters (6; 88; 139; 152; 178) eine Lichtauskoppeleinrichtung (7; 82; 108a, 108b; 126a, 126b; 136; 156; 176) aufweist, die Licht aus dem Hohlraum zu einer Lichtaustrittsfläche auskoppelt, und eine oder mehrere Lampen (15; 90; 102; 116a, 116b; 140; 157; 182) an einer zu der Wand mit der Lichtauskoppeleinrichtung nicht parallelen Lichteinkoppelseite des Hohllichtleiters (6; 88; 139; 152; 178) angeordnet sind und über diese Lichteinkoppelseite Licht in den Hohlraum einkoppeln, **dadurch gekennzeichnet, daß** eine elektrische Komponente (5; 96; 114; 129; 144; 160; 186) derart angebracht ist, daß sie zumindest teilweise in einem Bereich liegt, der zwischen der Wand mit der Lichtauskoppeleinrichtung und einer zu dieser Wand im wesentlichen parallelen Ebene liegt, die durch eine von der Lichtauskoppeleinrichtung weggewandte Oberkante der besagten Lichteinkoppelseite verläuft, wobei der Hohlraum (6; 88) des Hohllichtleiters eine der Lichtauskoppeleinrichtung gegenüberliegende, zumindest teilweise reflektierende Deckenwand (9; 56, 58a, 58b; 59a, 59b; 60a, 60b, 61; 67; 84; 106a, 106b; 124a, 124b) auf der Oberseite des Hohllichtleiters aufweist, die zumindest in einem Teilabschnitt einen geringeren Abstand von der Lichtauskoppeleinrichtung (7; 82; 108a, 108b; 126a, 126b) als in einem anderen Teilabschnitt hat, und im Bereich eines Teilabschnitts mit geringerem Abstand oberhalb der Deckenwand außerhalb des Hohlraums die elektrische Komponente (5; 96; 114; 129) angeordnet ist.

2.  Innenraumleuchte, insbesondere Innenraumleuchte nach Anspruch 1 und insbesondere Einbau-, Anbau- oder Pendelleuchte, mit einem Hohllichtleiter, wobei zumindest eine Wand des Hohlraums des Hohllichtleiters (6; 88; 139; 152; 178) eine Lichtauskoppeleinrichtung (7; 82; 108a, 108b; 126a, 126b; 136; 156; 176) aufweist, die Licht aus dem Hohlraum zu einer Lichtaustrittsfläche auskoppelt, und eine oder mehrere Lampen (15; 90; 102; 116a, 116b; 140; 157; 182) an einer zu der Wand mit der Lichtauskoppeleinrichtung nicht parallelen Lichteinkoppelseite des Hohllichtleiters (6; 88; 139; 152; 178) angeordnet sind und über diese Lichteinkoppelseite Licht in den Hohlraum einkoppeln, **dadurch gekennzeichnet, daß** eine elektrische Komponente (5; 96; 114; 129; 144; 160; 186) derart angebracht ist, daß sie zumindest teilweise in einem Bereich liegt, der zwischen der Wand mit der Lichtauskoppeleinrichtung und einer zu dieser Wand im wesentlichen parallelen Ebene liegt, die durch eine von der Lichtauskoppeleinrichtung weggewandte Oberkante der besagten Lichteinkoppelseite verläuft, wobei diese elektrische Komponente (144; 160; 174) zumindest teilweise in dem Hohlraum (139; 152; 178) angeordnet ist.

3.  Leuchte nach Anspruch 2, **dadurch gekennzeichnet, daß** die elektrische Komponente (144; 160) an der Deckenwand (132; 154) des Hohlraums befestigt ist.

4. Leuchte nach Anspruch 2 oder 3, **dadurch gekennzeichnet, daß** die elektrische Komponente (160) in der Mitte des Hohlraums (152) angeordnet ist.

5. Leuchte nach einem der Ansprüche 2 bis 4, **dadurch gekennzeichnet, daß** eine elektrische Komponente (144) in dem Hohlraum (139) in der Nähe einer Lichteinkoppelseite angeordnet ist, an der von einer Lampe (140) Licht eingestrahlt wird.

6. Leuchte nach Anspruch 5, **dadurch gekennzeichnet, daß** die elektrische Komponente (144) in der Nähe des Endes einer stabförmigen Lampe (140) angeordnet ist.

7. Leuchte nach einem der Ansprüche 2 bis 6, **dadurch gekennzeichnet, daß** die elektrische Komponente (144; 160; 186) mit einer reflektierenden Verkleidung versehen ist.

8. Leuchte nach einem der Ansprüche 1 bis 7, **dadurch gekennzeichnet, daß** die Lichtauskoppeleinrichtung aus einem zumindest teilweise lichtdurchlässigen Körper (20, 22) besteht, der den Hohlraum des Hohllichtleiters zumindest teilweise auf einer Seite begrenzt und eine oder mehrere Grenzflächen zwischen Medien mit unterschiedlichem Brechungsindex aufweist, die mit einer lichtbrechenden Struktur (24, 26, 28, 30) versehen sind, derart, daß der Körper (20, 22) einen Teil des auf ihn einfallenden Lichts in den Hohlraum zurück reflektiert und einen zweiten Teil des Lichts über diese lichtbrechende Struktur bzw. diese lichtbrechenden Strukturen zu einer Lichtaustrittsfläche auskoppelt.

9. Leuchte nach Anspruch 8, **dadurch gekennzeichnet, daß** die Struktur oder die Strukturen aus linienförmigen Prismen (24, 26) bestehen.

10. Leuchte nach Anspruch 9, **dadurch gekennzeichnet, daß** der Körper zumindest zwei Grenzflächen mit lichtbrechenden Strukturen aus linienförmigen Prismen aufweist, wobei die Prismen (24) an der ersten Grenzfläche mit den Prismen (26) an der zweiten Grenzfläche einen nicht verschwindenden Winkel einschließen.

11. Leuchte nach einem der Ansprüche 1 bis 10, **dadurch gekennzeichnet, daß** sie als Einbau- oder Anbauleuchte ausgebildet ist.

12. Leuchte nach einem der Ansprüche 1 bis 11, **dadurch gekennzeichnet, daß** die maximale Höhe des Hohllichtleiters weniger als 70 mm, vorzugsweise weniger als 55 mm beträgt.

13. Leuchte nach einem der Ansprüche 1 bis 12, **dadurch gekennzeichnet, daß** eine elektrische Komponente (5; 96; 144; 160; 174) an oder in dem Hohllichtleiter (6; 88; 152; 178) angebracht ist.

**Claims**

1. Indoor light, in particular a recessed, surface-mounted or hanging light, having a hollow waveguide, wherein at least one wall of the cavity of the hollow waveguide (6; 88; 139; 152; 178) has a light output device (7; 82; 108a, 108b; 126a, 126b; 136; 156; 176), which outputs light from the cavity to a light outlet surface, and one or more lamps (15; 90; 102; 116a, 116b; 140; 157; 182) is or are arranged at a light input side, which is not parallel to the wall with the light output device, of the hollow waveguide (6; 88; 139; 152; 178), and inject light into the cavity via this light input face, **characterized in that** an electrical component (5; 96; 114; 129; 144; 160; 186) is fitted in such a manner that it is located at least partially in an area which is located between the wall with the light output device and a plane which is essentially parallel to this wall and runs through an upper edge of the said light input face, which faces away from the light output device, with the cavity (6; 88) in the hollow waveguide having an at least partially reflective top wall (9; 56; 58a, 58b; 59a, 59b; 60a, 60b; 61; 67; 84; 106a, 106b; 124a, 124b) opposite the light output device, at the upper side of the hollow waveguide, which wall has a smaller distance to the light output device (7; 82; 108a, 108b; 126a, 126b) in at least one subsection than in another subsection, and the electrical component (5; 96; 114; 129) is arranged above the top wall outside the cavity in the area of a subsection having a smaller distance.

2. Indoor light, in particular indoor light according to Claim 1 and in particular a recessed, surface-mounted or hanging light, having a hollow waveguide, wherein at least one wall of the cavity of the hollow waveguide (6; 88; 139; 152; 178) has a light output device (7; 82; 108a, 108b; 126a, 126b; 136; 156; 176) which outputs light from the cavity to a light outlet surface, and one or more lamps (15; 90; 102; 116a, 116b; 140; 157; 182) is or are arranged at a light input side, which is not parallel to the wall with the light output device, of the hollow waveguide (6; 88; 139; 152; 178), and injects or inject light into the cavity via this light input face, **characterized in that** an electrical component (5; 96; 114; 129; 144; 160; 186) is fitted in such a manner that it is located at least partially in an area which is located between the wall with the light output device and a plane which is essentially parallel to this wall and runs through an upper edge, facing away from the light output device, of the said light input face, with this electrical component (144; 160; 174) being at least partially arranged in the cavity (139; 152; 178).

3. Light according to Claim 2, **characterized in that** the electrical component (144; 160) is attached to the top wall (132; 154) of the cavity.

4. Light according to Claim 2 or 3, **characterized in that** the electrical component (160) is arranged in the centre of the cavity (152).

5. Light according to one of Claims 2 to 4, **characterized in that** an electrical component (144) is arranged in the cavity (139), in the vicinity of a light input face, at which light is injected from a lamp (140).

6. Light according to Claim 5, **characterized in that** the electrical component (144) is arranged in the vicinity of the end of a lamp (140) which is in the form of a rod.

7. Light according to one of Claims 2 to 6, **characterized in that** the electrical component (144; 160; 186) is provided with a reflective lining.

8. Light according to one of Claims 1 to 7, **characterized in that** the light output device consists of an at least partially light-transmitting body (20, 22), which at least partially bounds the cavity of the hollow waveguide on one face and has one or more boundary surfaces between media with a different refractive index, which are provided with a refractive structure (24, 26, 28, 30) in such a manner that the body (20, 22) reflects back a portion of the light that is incident on it into the cavity, and outputs a second portion of the light via this refractive structure or these refractive structures to a light output surface.

9. Light according to Claim 8, **characterized in that** the structure or the structures consists of or consist of linear prisms (24, 26).

10. Light according to Claim 9, **characterized in that** the body has at least two boundary surfaces with refractive structures composed of linear prisms, with the prisms (24) on the first boundary surface including a finite angle with the prisms (26) on the second boundary surface.

11. Light according to one of Claims 1 to 10, **characterized in that** the light is a recessed or surface-mounted light.

12. Light according to one of Claims 1 to 11, **characterized in that** the maximum height of the hollow waveguide is less than 70 mm, and preferably less than 55 mm.

13. Light according to one of Claims 1 to 12, **characterized in that** one electrical component (5; 96; 144; 160; 174) is fitted to or in the hollow waveguide (6; 88; 152; 178).

**Revendications**

1. Luminaire intérieur, en particulier luminaire encastré, fixé sur une machine ou suspendu, avec un conducteur de lumière, moyennant quoi au moins une paroi de la cavité du conducteur de lumière (6 ; 88 ; 139 ; 152 ; 178) comprend un dispositif de déclenchement de la lumière (7 ; 82 ; 108a ; 108b ; 126a ; 126b ; 136 ; 156 ; 176) qui déclenche la lumière hors de la cavité vers une surface de sortie de la lumière, et une ou plusieurs lampes (15 ; 90 ; 102 ; 116a ; 116b ; 140 ; 157 ; 182) sont disposées contre une face de couplage de la lumière, non parallèle à la paroi comprenant le dispositif de déclenchement de la lumière, du conducteur de lumière (6 ; 88 ; 139 ; 152 ; 178), et elles couplent via cette face de couplage de la lumière la lumière dans la cavité, **caractérisé en ce qu'**un composant électrique (5 ; 96 ; 114 ; 129 ; 144 ; 160 ; 186) est appliqué de telle sorte qu'il se situe au moins partiellement dans une zone située entre la paroi comprenant le dispositif de déclenchement de la lumière et un plan sensiblement parallèle à cette paroi, lequel plan s'étend à travers une arête supérieure, opposée au dispositif de déclenchement de la lumière, de la face de couplage de lumière mentionnée, moyennant quoi la cavité (6 ; 88) du conducteur de lumière comprend une paroi de recouvrement (9 ; 56, 58a, 59a, 59b, 60a, 61 ; 67 ; 84 ; 106a ; 106b ; 124a ; 124b) au moins partiellement réfléchissante opposée au dispositif de déclenchement de la lumière sur la face supérieure du conducteur de lumière, qui se situe au moins dans un segment partiel à une distance plus faible du dispositif de déclenchement de la lumière (7 ; 82 ; 108a ; 108b ; 126a ; 126b) que dans un autre segment partiel, et le composant électrique (5 ; 96 ; 114 ; 129) est disposé dans la zone d'un segment partiel à une distance inférieure au-dessus de la paroi de recouvrement à l'extérieur de la cavité.

2. Luminaire intérieur, en particulier luminaire intérieur selon la revendication 1 et en particulier luminaire encastré, fixé sur une machine ou suspendu, avec un conducteur de lumière, moyennant quoi au moins une paroi de la cavité du conducteur de lumière (6 ; 88 ; 139 ; 152 ; 178) comprend un dispositif de déclenchement de la lumière (7 ; 82 ; 108a ; 108b ; 126a ; 126b ; 136 ; 156 ; 176) qui déclenche la lumière hors de la cavité vers une surface de sortie de la lumière, et une ou plusieurs lampes (15 ; 90 ; 102 ; 116a ; 116b ; 140 ; 157 ; 182) sont disposées contre une face de couplage de la lumière, non parallèle à la paroi comprenant le dispositif de déclenchement de la lumière, du conducteur de lumière (6 ; 88 ; 139 ; 152 ; 178), et elles couplent via cette face de couplage de la lumière la lumière dans la cavité, **caractérisé en ce qu'**un composant électrique (5 ; 96 ; 114 ; 129 ; 144 ; 160 ; 186) est appliqué de telle sorte qu'il se situe au moins partiellement dans une zone située entre la paroi comprenant le dispositif de déclenchement de la lumière et un plan sensiblement parallèle à cette paroi, lequel plan s'étend à travers une arête supérieure, opposée au dispositif de déclenchement de la lumière, de la face de couplage de lumière mentionnée, moyennant quoi ce composant électrique (144 ; 160 ; 174) est disposé au moins partiellement dans la cavité (139 ; 152 ; 178).

3. Luminaire selon la revendication 2, **caractérisé en ce que** le composant électrique (144 ; 160) est fixé contre la paroi de recouvrement (132 ; 154) de la cavité.

4. Luminaire selon la revendication 2 ou 3, **caractérisé en ce que** le composant électrique (160) est disposé au centre de la cavité (152).

5. Luminaire selon une des revendications 2 à 4, **caractérisé en ce qu'**un composant électrique (144) est disposé dans la cavité (139) à proximité d'une face de couplage de la lumière, contre laquelle de la lumière est diffusée par une lampe (140).

6. Luminaire selon la revendication 5, **caractérisé en ce que** le composant électrique (144) est disposé à proximité de l'extrémité d'une lampe (140) en forme de barre.

7. Luminaire selon une des revendications 2 à 6, **caractérisé en ce que** le composant électrique (144; 160; 186) est doté d'un revêtement réfléchissant.

8. Luminaire selon une des revendications 1 à 7, **caractérisé en ce que** le dispositif de déclenchement de la lumière est composé d'un corps (20, 22) au moins partiellement transparent qui limite la cavité du conducteur de lumière au moins partiellement sur une face, et comprend une ou plusieurs surfaces de délimitation entre des supports ayant un indice de réfraction variable, lesquels sont dotés d'une structure réfringente (24, 26, 28, 30), de sorte que le corps (20, 22) renvoie une partie de la lumière incidente sur lui dans la cavité et déclenche une seconde partie de la lumière par cette structure réfringente et/ou ces structures réfringentes vers une surface de sortie de la lumière.

9. Luminaire selon la revendication 8, **caractérisé en ce que** la structure ou les structures sont formées de prismes linéaires (24, 26).

10. Luminaire selon la revendication 9, **caractérisé en ce que** le corps comprend au moins deux surfaces de délimitation avec des structures réfringentes formées de prismes linéaires, moyennant quoi les prismes (24) contre la première surface de délimitation avec les prismes (26) contre la seconde surface de délimitation enferment un angle qui n'est pas infiniment petit.

11. Luminaire selon une des revendications 1 à 10, **caractérisé en ce que** le luminaire est construit comme un luminaire encastré ou un luminaire rapporté.

12. Luminaire selon une des revendications 1 à 11, **caractérisé en ce que** la hauteur maximale du conducteur de lumière est inférieure à 70 mm, et de préférence inférieure à 55 mm.

**13.** Luminaire selon une des revendications 1 à 12, **caractérisé en ce qu'**un composant électrique (5 ; 96 ;144 ;160 ; 174) est situé sur ou dans le conducteur de lumière (6 ; 88 ;152 ;178).

## Fig.1

## Fig.2

**Fig. 3**

**Fig. 4**

**Fig. 5**

## Fig.6a

## Fig.6b

## Fig.6c

## Fig.6d

## Fig.6e

**Fig. 7**

**Fig. 8**

**Fig. 9**

## Fig.10 a

## Fig.10b

# Fig.11a

# Fig.11b

# Fig.12

# Fig.13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5863114 A
- JP 10154411 A